# EUROPEAN PATENT APPLICATION

(11) **EP 4 703 812 A1**
(43) Date of publication of application: **04.03.2026**
(21) Application number: 24197469.0
(22) Date of filing: 30.08.2024
(51) Int. Cl.: G05B 13/02, F24F 11/62

(54) **A CONTROL DEVICE FOR CONTROLLING AN HVAC SYSTEM**

(71) Applicant: Siemens Schweiz AG, 8047 Zürich (CH)
(72) Inventor: The designation of the inventor has not yet been filed
(74) Representative: Siemens Patent Attorneys

(57) **Abstract**

The invention relates to a control device (10) for controlling an HVAC system (12), wherein the control device (10) is configured to: provide a first model (18) using first model parameters giving first output variables as a function of first input variables; provide an ODE solver (24) configured to solve the first model (18) to calculate a determined trajectory of the indoor temperature and a determined trajectory of the return air temperature as a function of trajectories of the first input variables; define a training objective function determining a difference between the determined trajectories of the indoor temperature and the return air temperature and respective measured trajectories of the indoor temperature and the return air temperature; minimize the training objective function with respect to the first model parameters; and update the first model parameters in the first model (18).

## Description

The present invention relates to a control device and a computer-implemented method for controlling an HVAC system, as well to a computer-program-product, and a computer-readable storage medium.

Heating, ventilation and air-conditioning (HVAC) systems have a considerable impact on building energy consumption and thermal comfort. They are usually controlled with a cascade of supervisory and local controls. All of these controls are usually rule-based and parameterized, whereby the parameters are usually selected based on experience or trial and error, and not guaranteed to be optimal. Therefore, there is often untapped optimization potential in HVAC system controls, which could be converted into energy savings and comfort improvements.

For an air handling unit (AHU), an important aspect of controls is the deliberate use of cool outdoor air to reduce cooling energy demand, which is referred to as free cooling (during daytime operation) and night purge (at nighttime, when the AHU would otherwise be off). Substantial energy savings can be achieved in this way, but this requires an adequate consideration of both air handling unit and building behavior which requires going beyond rule-based controls with default parameters.

Radiant heating and cooling systems are characterized by a higher degree of thermal inertia as compared to other types of heat delivery subsystems, which means that controlling them optimally requires anticipating conditions likely to occur in the next hours rather than just reacting to current conditions.

A variety of approaches have been proposed with the aim of improving HVAC controls beyond rule-based control. They can broadly be grouped into model-predictive control and data-driven control.

Model-predictive control formulates control as a mathematical optimization problem, using a model which is usually based on physics. A variety of objective functions (typically including energy consumption and thermal comfort, temperature bounds) and mathematical model structures are used. In many cases, the problems are expressed as linear programming, mixed integer linear programming (MILP) or quadratic programming problems, which allows them to be solved efficiently, but constrains modeling and makes significant simplifications necessary. Importantly, MPC requires models of HVAC systems and/or the buildings they serve, which means significant repeated modeling effort for each new system and represents a barrier to adoption.

Data-driven approaches eliminate or reduce this modeling effort by use of some self-tuning or learning procedure. Reinforcement learning represents a purely data-driven approach, whereby the controller is implemented as an "agent" which is only provided with a reward function and learns to maximize this reward function by interacting with its environment, i.e. with the actual HVAC system and the building it serves. A significant challenge with reinforcement learning is that it requires a certain period of interaction before converging to useful behavior, which is usually not acceptable with real systems. Hence, much of the published literature relies on simulation to pre-train a reinforcement learning agent, which brings back the drawback of modeling effort.

The above-mentioned challenges - as well as the difficulty to establish confidence in new solutions against the well-established solutions of rule-based control - result in a very low market penetration for both MPC and reinforcement learning for HVAC controls.

It is an object of the present invention to provide a control device configured to control an HVAC system.

This objective is achieved by the respective subject matter of the independent claims. Further implementations and preferred embodiments are subject matter of the dependent claims.

The present invention relates to a control device for controlling an HVAC system. The HVAC system may comprise an HVAC device located in an infrastructure environment such as a building or other enclosed environment. The control device is configured to control the HVAC system using models. Therefore, to enable control of the HVAC system, it is necessary to provide a first model representing the infrastructure environment. The first model may be an ordinary differential equation model. Therefore, the control device is configured to provide the first model using first model parameters that provides first output variables comprising a time derivative of an indoor temperature and a time derivative of a return air temperature as a function of first input variables comprising an indoor temperature, a return air temperature, a supply air temperature, and an outside air temperature. The first model is used to represent a free cooling situation. The first model parameters may comprise a heat capacity of the infrastructure environment. The first model parameters may depend on the specific infrastructure environment and may have to be trained for a proper use.

The control device further comprises an ODE solver that is configured to solve the first model and to calculate a determined trajectory of the indoor temperature and a determined trajectory of the return air temperature as a function of trajectories of the first input variables. The control device is configured to define a training objective function that determines the difference between the determined trajectories of the indoor temperature and the return air temperature and respective measured trajectories. In other words, the training objective function is used to describe the difference between the calculated trajectories and the measured trajectories. The measured trajectories may be provided by sensor units of the HVAC system. The calculated trajectories depend on the first model parameters of the first model. To improve the first model, the difference between the calculated trajectories and the measured trajectories must be reduced. The control device is configured to minimize the training objective function with regard to the first model parameters. The minimization may be performed by using a gradient-based optimization. In other words, the control device is configured to find the optimum first model parameters that minimize the training objective function.

The control device is configured to minimize the training objective function with respect to the first model parameters in order to update them in the first model, resulting in improved accuracy and performance of the first model in predicting the behavior of the HVAC system.

In summary, the present invention provides a control device that combines a first model with the ODE solver and uses gradient-based optimization to improve the accuracy of the first model in predicting the behavior of an HVAC system, allowing for more efficient and effective control and optimization.

According to a further embodiment of the present invention, the control device is configured to perform a model-predictive control by providing a model-predictive combined model that comprises the first model and a second model. The first model calculates the indoor temperature based on the return air temperature, while the second model gives the time derivative of the supply air temperature as a function of optimization variables, including heating energy, cooling energy, and damper position.

The ODE solver is configured to solve the combined model, allowing for the calculation of determined trajectories of the indoor, return air and supply air temperatures based on trajectories of the optimization variables and on a predicted trajectory of the outside temperature.

The control device is configured to define the control optimization objective function that combines the determined trajectory of the indoor temperature, as well as the trajectories of the heating energy and the cooling energy. The control device is configured to minimize the control optimization objective function with respect to the trajectories of the optimization variables, resulting in optimized values for the heating energy, cooling energy, and damper position. The control device is configured to provide the optimized trajectories to the HVAC system, allowing for improved performance and efficiency compared to traditional rule-based control methods. The control optimization objective function may be defined to describe an amount of total energy used to provide the indoor temperature. The trajectory of the indoor temperature may be predefined. The aim of the optimization may be to find the optimized trajectories of the optimization variables that minimize the total energy necessary to achieve the trajectory of the indoor temperature. The optimized trajectories of the optimization variables may be a schedule for setting the optimization variables in the HVAC system during the time of the predicted outdoor temperature trajectory. Based on the optimized trajectories of the optimization variables, an energy use for operating the HVAC system according to the optimized trajectories may be calculated by the control device.

In summary, the present embodiment allows a model-predictive control to improve the performance of the HVAC system. By providing a first combined model, and the ODE solver, a control optimization objective function, and minimizing this objective function with respect to the trajectories of optimization variables, the control device is able to provide optimized trajectories of the heating energy, the cooling energy, and the damper position, resulting in an improved efficiency.

According to a further embodiment of the present invention, the control device is configured to perform a rule-based control by providing a rule-based combined model comprising the first model for indoor temperature, the second model for supply air temperature, and a third model for the optimization variables. The third model is provided using control parameters. The third model is configured to provide the optimization variables as a function of the outside temperature.

The control device is configured to provide the trajectories of the indoor temperature, as well as the trajectories of the heating energy and the cooling energy. The control device may determine, based on the trajectories of the heating energy and the cooling energy, the energy needed during the period of time.

The provision of the trajectories of the indoor temperature, the heating energy and the cooling energy may be used to optimize the selection of the trajectories of the optimization parameters for a predicted trajectory of the outside temperature. This approach allows for accurate predictions of system behavior, while the inclusion of a third model for optimization variables enables the calculation of optimal control actions over a specified time horizon.

According to a further embodiment of the present invention, the control device is configured to define a control optimization objective function that combines the determined trajectories of the indoor temperature, the heating energy, and the cooling energy. The control device is configured to use the control optimization objective function to determine optimal control parameters for the third model.

Therefore, the control device is configured to define the control optimization objective function by taking into account the determined trajectories of the indoor temperature, the heating energy, and the cooling energy. The control device is configured to minimize the control optimization objective function with respect to the control parameters of the third model using gradient-based optimization techniques. This results in a set of optimal control parameters.

Finally, the control device updates the control parameters of the third model based on the optimal control parameters obtained from the minimization process. This improves the provision of the optimization variables by the third model.

According to a further embodiment of the present invention, the control device is configured to compare the respective energies determined for the control of the HVAC system by using the respective combined models and to select the combined model of the lowest energy need to control the HVAC system. In other words, the control device is configured to use the respective combined models to model the control of the HVAC system. The respective models may provide different trajectories of the optimization variables for controlling the HVAC system to achieve a predefined trajectory of the indoor temperature for the expected trajectory of the outside temperature. For each of the solutions provided by the respective models, the control device may determine the energy necessary for the respective solutions. The control device identifies the solution needing the lowest energy and may use the respective combined model for determining the further control parameters.

According to a further embodiment of the present invention, the control device comprises a model library with pre-set models of the models. In other words, to allow a reliably control of the HVAC system, suitable models must be used. The pre-set models of the first model may describe different infrastructure environments. The pre-set models of the first model may comprise different values of the first model parameters. As an example, one of the pre-set models may be related to a large hall and another one of the pre-set models may be related to a small house made of wood. The pre-sets may define different heat capacities. The pre-set models of the second model and the third model may relate to one or more devices of the HVAC system. They may be adapted to the efficiency of the respective devices. The control device is further configured to select the respective models from the pre-set library based on metadata of the HVAC system. This enables the use of specialized models tailored to the specific characteristics and needs of the HVAC system, resulting in improved performance and energy efficiency compared to traditional control methods. The control device may for example receive information from the HVAC system comprising metadata of the HVAC system such as model numbers of the devices. The control device may select the respective pre-set model as a function of the metadata. By using a model library with pre-set models, the control device can quickly and accurately determine the respective models for the HVAC system, reducing a time and an effort required for manual configuration and tuning. The use of metadata further enhances the selection process by allowing the control device to select the most appropriate models based on the unique features and requirements of the HVAC system.

The control device may comprise computing devices.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

The objective of the invention is also solved by a method for controlling a heating, ventilation and air-conditioning, HVAC, system, comprising following steps:
- providing a first model using first model parameters giving first output variables comprising a time derivative of an indoor temperature and a time derivative of a return air temperature as a function of first input variables comprising an indoor temperature, a return air temperature, a supply air temperature, and an outside air temperature,
- solving the first model with an ordinary differential equation, ODE, and calculating a determined trajectory of the indoor temperature and a determined trajectory of the return air temperature as a function of trajectories of the first input variables,
- defining a training objective function determining a difference between the determined trajectories of the indoor temperature and the return air temperature and respective measured trajectories of the indoor temperature and the return air temperature,
- minimizing the training objective function with respect to the first model parameters; and
- update the first model parameters in the first model,
- controlling the HVAC system with a control device using the first model.

The control device is comprised by the HVAC system and includes means to control the respective heating and/or ventilation and/or air-conditioning modules of the HVAC system.

It is clear that the HVAC system can comprise only one or more HVAC modules, selected out of heating and/or ventilation and/or air-conditioning modules.

According to a further embodiment of the present invention, the method comprises following further steps:
- providing a combined model-predictive model, comprising the first model and a second model,
- providing the second model, giving a time derivative of the supply air temperature as a function of optimization variables, the optimization variables comprising a heating energy, a cooling energy and a damper position,
- providing an ordinary differential equation, ODE, solver configured to solve the first model and the second model to calculate determined trajectories of the indoor, return air and supply air temperatures as a function of trajectories of the optimization variables and of a predicted trajectory of the outside temperature,
- defining a control optimization objective function combining the determined trajectory of the indoor temperature, the trajectory of the heating energy and the trajectory of the cooling energy,
- minimizing the control optimization objective function with respect to the trajectories of the optimization variables; and
- providing optimized trajectories of the optimization variables to the HVAC system.

According to a further embodiment of the present invention, the method comprises comprises following further steps:
- providing a combined rule-based control model, comprising the first model, the second model and a third model,
- providing the third model using control parameters, giving the optimization variables as a function of the outside temperature,
- providing the second model, giving a time derivative of the supply air temperature as a function of the optimization variables, the optimization variables,
- calculating the trajectories of the optimization variables as a function of a trajectory of the outside temperature,
- providing the ODE solver, configured to solve the first model and the second model to calculate a determined trajectory of the indoor, return air and supply air temperatures as a function of trajectories of the optimization variables calculated by the third model and of a predicted trajectory of the outside temperature,
- providing the trajectories of the indoor temperature, the trajectory of the heating energy and the trajectory of the cooling energy.

According to a further embodiment of the present invention, the method comprises comprises following further steps:
- defining a control optimization objective function combining the determined trajectory of the indoor temperature, the trajectory of the heating energy and the trajectory of the cooling energy,
- minimizing the control optimization objective function with respect to the control parameters; and
- updating the control parameters of the third model.

According to a further embodiment of the present invention, the method comprises comprises following further steps:
- comparing respective energies determined for the control of the HVAC system by using the respective combined model,
- selecting the combined model of the lowest energy need to control the HVAC system.

According to a further embodiment of the present invention, the method comprises comprises following further steps:
- providing a model library comprising pre-sets of the models,
- selecting the respective models from the pre-sets of the models as a function of metadata of the HVAC system.

The objective of the invention is also solved by a computer-program-product with stored machine-readable commands, which, when executed by a control device according to the invention, cause the computer-program-product to carry out the method according to the invention.

The objective of the invention is also solved by a computer-readable storage medium, comprising instructions which, when executed by a computer, cause the computer to carry out the steps of the method according to the invention. The control device according to the invention can be the computer.

Independent of the grammatical term usage, individuals with male, female or other gender identities are included within the term.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

In the figures,
FIG 1 shows a schematic illustration of a method to operate a control device;
FIG 2 shows a schematic illustration of a first model;
FIG 3 shows a schematic illustration of a combined model; and
FIG 4 shows a schematic illustration of another combined model.

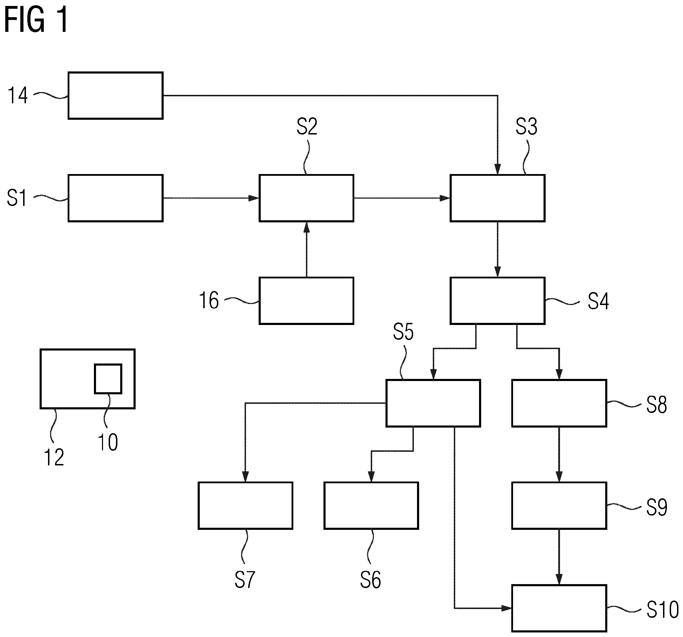

FIG 1 shows a schematic illustration of a method to operate a control device.

A first step S1 may comprise a reception of metadata describing an HVAC system 12 by a control device 10. The metadata may comprise information about HVAC devices of the HVAC system 12 and information about the infrastructure environment where the HVAC system 12 is installed. The infrastructure environment may be a house or a building.

In a second step S2, the control device 10 may retrieve respective pre-set models of models from a model library 16 of the control device 10. A first model 18 may be related to the infrastructure environment. A second model 20 may be related to the HVAC system 12. A third model 22 may be related to a control of the HVAC system 12. The control device 10 may select the respective pre-set models as a starting point for generating a combined model. The modeling of space and equipment behavior in HVAC systems 12 and buildings may be achieved through ordinary differential equations with learned parameters in a hybrid data-driven physics-informed approach. A hybrid model library 16 may be utilized, containing differentiable models applicable to HVAC systems 12 and buildings that may be combined in a modular fashion. In this approach, model components based on physics are preferred where physical modeling is possible with the available data and a limited number of parameters, such as ventilation-driven heat exchange determined by ventilation flow rate and temperature differences. For aspects less amenable to physical modeling given available data, data-driven model components based on artificial neural networks (ANN) are used, such as for heat gains in the spaces served by HVAC systems 12.

In a third step S3, the control device 10 may perform a training of the first model 18. The training may comprise a recording of trajectories by sensor units of the HVAC system 12. The control device 10 may calculate provided trajectories for trajectories of first input data and compare the trajectories of first output data with the respective recorded trajectories. By optimizing the parameters of the first model 18, the first model 18 can be adapted to the infrastructure environment. After training, the first model 18 can provide an accurate representation of the infrastructure environment.

In a fourth step S4, the control device 10 may provide a combined model by combining the first model 18 with at least one further model. Learning and validation is performed through gradient-based optimization with respect to uncertain parameters, which include both physical parameters and data-driven parameters. Two alternative pathways to control improvement are available: comparison or optimization of rule-based control parameters, and model-predictive control. In the first approach, trained models are combined with models of equipment energy use and rule-based control, resulting in variations in control parameters to find improved settings. In the second approach, trained models are combined with models of equipment energy use, objective functions and constraints are defined, and an optimal schedule of actuator variables for a given time horizon is computed by solving an optimization problem using the resulting models.

In a fifth step S5, the control device 10 may provide a combined model with a rule-based control. The control device 10 may combine the first model 18 with a second model 20 and a third model 22. For the rule-based control case a third model 22 approximating rule-based control may combined with the first model 18 and the second model 20 giving the energy and supply temperature. The resulting combined model may be used to simulate rule-based control in different conditions with different values of control parameters and evaluate the corresponding energy and comfort performance. Alternatively, an objective function may be formulated as in the model-predictive control case and minimized with respect to the control parameters. The latter approach makes it possible to optimize control parameters while keeping the simplicity of rule-based control.

In a sixth step S6, the control device 10 may use the trajectories of the indoor temperature, the cooling energy and the heating energy to compare the control parameters of the third model 22.

In a seventh step S7, the control device 10 may perform an optimization approach to optimize the control parameters.

Another approach is a generation of a combined model with fully optimized control in an eight step S8. The control device 10 may combine the first model 18 with the second model 20 to generate the combined model.

In a ninth step S9, the control device 10 may solve a function to evaluate optimized trajectories of the optimization parameters.

In a tenth step S10, the control device 10 may investigate energy saving possible by the method.

The control device 10 may also control the infrastructure environment according to the optimized optimization parameters.

FIG 1 displays the primary elements of the solution, which consist of selecting and training applicable (hybrid, physics-based, data-driven) models using gradient-based optimization based on the provided metadata and time series data. These trained first model 18 may then be combined with the additional models to be used in rule-based control improvement and/or model-predictive control.

In this approach, the required metadata may be utilized to select the most appropriate pre-set models for the given HVAC system 12. The selected pre-set models may then be trained using gradient-based optimization, allowing for efficient and accurate optimization of the control actions based on the available data.

The trained first model 18 is then integrated with the additional models to improve rule-based control or implement model-predictive control strategies. This results in more effective and efficient control actions compared to traditional methods, leading to reduced costs, increased productivity, and improved comfort for building occupants.

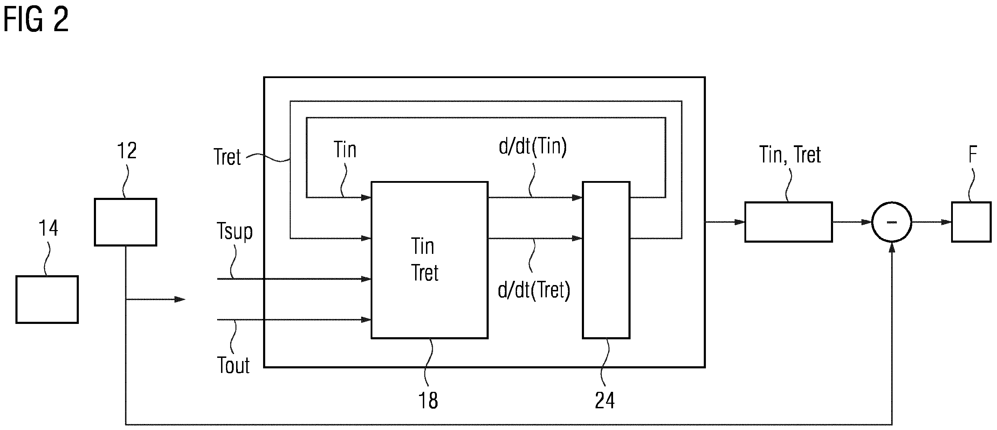

FIG 2 shows a schematic illustration of a first model 18.

FIG 2, FIG 3 and FIG 4 illustrate the model recombination process for a free cooling use case.

Model training focuses on the first model 18, which calculates the time derivative of indoor and return air temperatures as a function of indoor, return air, supply air and outside air temperatures. A differentiable ordinary differential equation (ODE) solver 24 may calculate the resulting trajectories of indoor and return air temperatures, based on which the training objective function is calculated. All calculations being differentiable, this training objective function may be minimized with respect to model parameters by gradient descent.

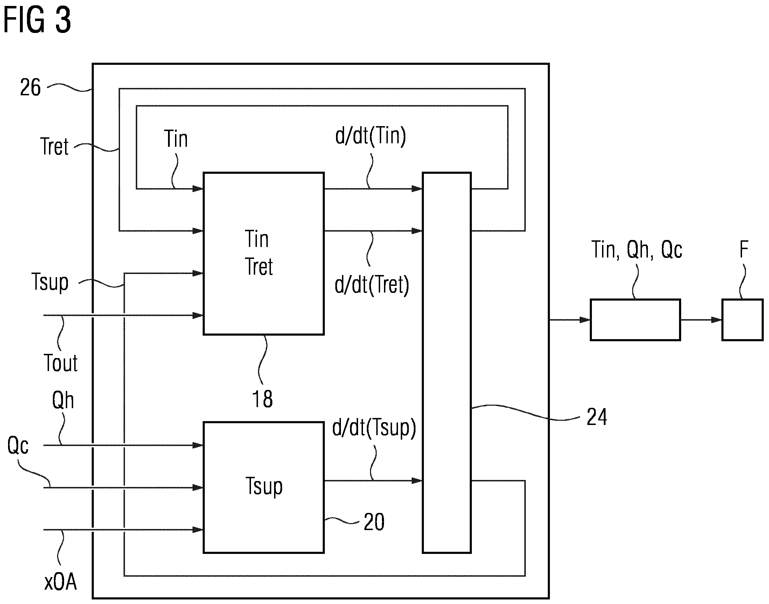

FIG 3 shows a schematic illustration of a combined model.

The combined model-predictive model 26 may be configured to represent the model-predictive case. The first model 18 may be combined with a second ODE being a model energy and supply temperature model represented. For the model-predictive case shown in FIG 3, the resulting energy use and indoor temperature values may be aggregated into an objective function which may be minimized with respect to optimization variables e.g. a damper position along time for the optimization horizon using gradient-based optimization.

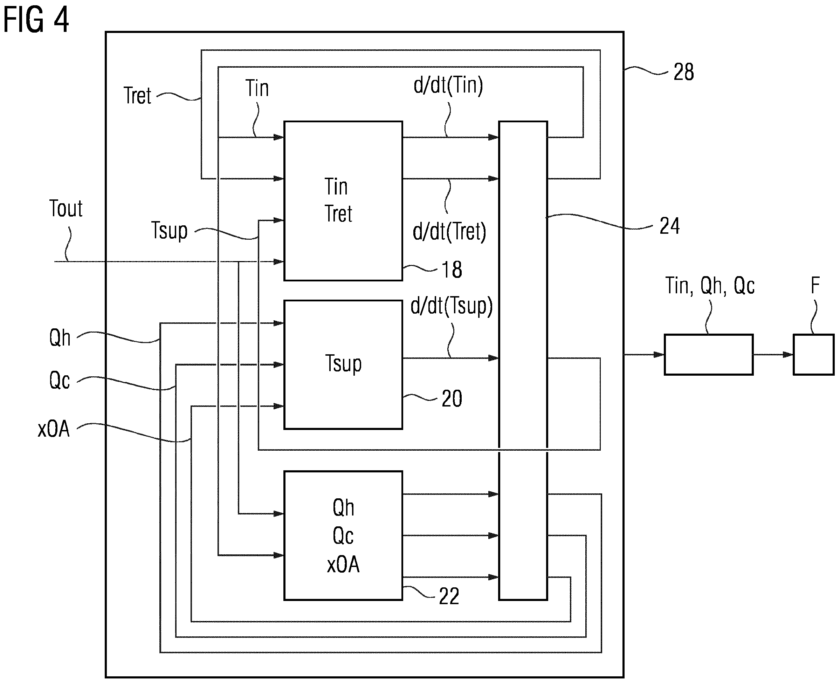

FIG 4 shows a schematic illustration of another combined model.

The combined rule-based control model 28 may be configured to represent the rule-based control case. For the rule-based control case, an additional submodel approximating rule-based control is combined with the main model and the energy and supply temperature model. The resulting model can be used to simulate rule-based control in different conditions with different values of control parameters and evaluate the corresponding energy and comfort performance. Alternatively, an objective function can be formulated as in the model-predictive control case and minimized with respect to the control parameters. The latter approach makes it possible to optimize control parameters while keeping the simplicity of rule-based control.

A key advantage is that the same model parameters which can learned from past operation can be used both to evaluate the impact of alternative control parameters staying within rule-based control and to suggest directly optimized operation schedules following a model-predictive control approach.

A seamless integration of physics-based and data-driven model components and possibility to train with the same method a variety of models on a spectrum ranging from physics-based models with a reduced number of parameters to data-driven deep learning models, whereby models on the data-driven end of the spectrum can come to replace models on the physics-based end of the spectrum as the amount of available data increases. As a consequence, the models can be used without a long training period, but continuous improvement can be achieved by retraining with more data.

Integration with existing equipment is possible, accommodation of different levels of data availability. In all cases, an evaluation of energy use is provided as an output and can be used to inform the decision of whether to move from rule-based control to model-predictive control. Advantages of ODE formulation comprise that the models are independent of resolution and time horizon and make it possible to trade off accuracy and computation time.

The invention has advantages compared to a model-predictive control using linear or mixed integer linear programming. The invention allows a flexible modeling combining physics-based and ANN components, a gradient-based learning procedure and gradient-based control optimization, This gives the advantage, that the invention allows more expressive modeling by an integration of ANN submodels, an easy learning procedure, whereas there is no easy way to fit the parameters of an LP or MILP program to data, and an ability to provide suggestions of improved parameters for rule-based control

The invention has advantages compared to reinforcement learning. The invention allows physics-based model components. This gives the advantage, that the approach does not require a long training period and has an ability to provide suggestions of improved parameters for rule-based control.

The invention has advantages compared to grey-box modeling with fixed structures, e.g. resistance capacitor models. The invention allows a flexible modeling combining physics-based and ANN components and gradient-based control optimization. This gives the advantage, that the approach allows more expressive modeling thanks to the integration of ANN submodels, an easy and efficient gradient-based learning procedure without the need for an inefficient black-box optimization scheme, and an easy and efficient gradient-based control optimization without the need for linearization or use of an inefficient black-box optimization scheme.

### List of Reference

- 10: control device
- 12: HVAC system
- 14: training data
- 16: model library
- 18: first model
- 20: second model
- 22: third model
- 24: solver
- 26: combined model-predictive model
- 28: combined rule-based control model
- S1-S10: steps

## Claims

1. A control device (10) for controlling heating, ventilation and air-conditioning, HVAC, system (12), wherein the control device (10) is configured to,
- provide a first model (18) using first model parameters giving first output variables comprising a time derivative of an indoor temperature and a time derivative of a return air temperature as a function of first input variables comprising an indoor temperature, a return air temperature, a supply air temperature, and an outside air temperature;
- provide an ordinary differential equation, ODE, solver (24) configured to solve the first model (18) to calculate a determined trajectory of the indoor temperature and a determined trajectory of the return air temperature as a function of trajectories of the first input variables;
- define a training objective function determining a difference between the determined trajectories of the indoor temperature and the return air temperature and respective measured trajectories of the indoor temperature and the return air temperature;
- minimize the training objective function with respect to the first model parameters; and
- update the first model parameters in the first model (18).

2. The control device (10) according to claim 1, wherein the control device (10) is configured to
- provide a combined model-predictive model (26), comprising the first model (18) and a second model (20);
- provide the second model (20), giving a time derivative of the supply air temperature as a function of optimization variables, the optimization variables comprising a heating energy, a cooling energy and a damper position;
- provide the ODE solver (24) configured to solve the first model (18) and the second model (20) to calculate determined trajectories of the indoor, return air and supply air temperatures as a function of trajectories of the optimization variables and of a predicted trajectory of the outside temperature;
- define a control optimization objective function combining the determined trajectory of the indoor temperature, the trajectory of the heating energy and the trajectory of the cooling energy;
- minimize the control optimization objective function with respect to the trajectories of the optimization variables; and
- provide optimized trajectories of the optimization variables to the HVAC system (12).

3. The control device (10) according to claim 1 or 2, wherein the control device (10) is configured to
- provide a combined rule-based control model (28), comprising the first model (18), the second model (20) and a third model (22),
- provide the third model (22) using control parameters, giving the optimization variables as a function of the outside temperature;
- provide the second model (20), giving a time derivative of the supply air temperature as a function of the optimization variables, the optimization variables;
- calculate the trajectories of the optimization variables as a function of a trajectory of the outside temperature;
- provide the ODE solver (24), configured to solve the first model (18) and the second model (20) to calculate a determined trajectory of the indoor, return air and supply air temperatures as a function of trajectories of the optimization variables calculated by the third model (22) and of a predicted trajectory of the outside temperature;
- provide the trajectories of the indoor temperature, the trajectory of the heating energy and the trajectory of the cooling energy.

4. The control device (10) according to claim 3, wherein the control device (10) is configured to,
- define a control optimization objective function combining the determined trajectory of the indoor temperature, the trajectory of the heating energy and the trajectory of the cooling energy;
- minimize the control optimization objective function with respect to the control parameters; and
- update the control parameters of the third model (22).

5. The control device (10) according to claim 3 or 4, wherein the control device (10) is configured to compare respective energies determined for the control of the HVAC system (12) by using the respective combined model and to select the combined model of the lowest energy need to control the HVAC system (12).

6. The control device (10) according to any one of the preceding claims, wherein the control device (10)
- comprises a model library (16) comprising pre-sets of the models; and
- is configured to select the respective models from the pre-sets of the models as a function of metadata of the HVAC system (12).

7. Computer-implemented method for controlling a Heating, ventilation and air-conditioning, HVAC, system (12), comprising following steps:
- providing a first model (18) using first model parameters giving first output variables comprising a time derivative of an indoor temperature and a time derivative of a return air temperature as a function of first input variables comprising an indoor temperature, a return air temperature, a supply air temperature, and an outside air temperature,
- solving the first model (18) with an ordinary differential equation, ODE, and calculating a determined trajectory of the indoor temperature and a determined trajectory of the return air temperature as a function of trajectories of the first input variables,
- defining a training objective function determining a difference between the determined trajectories of the indoor temperature and the return air temperature and respective measured trajectories of the indoor temperature and the return air temperature,
- minimizing the training objective function with respect to the first model parameters,
- update the first model parameters in the first model (18),
- controlling the HVAC system (12) with a control device using the first model (18).

8. Method according to claim 7, comprising following further steps:
- providing a combined model-predictive model (26), comprising the first model (18) and a second model (20),
- providing the second model (20), giving a time derivative of the supply air temperature as a function of optimization variables, the optimization variables comprising a heating energy, a cooling energy and a damper position,
- providing an ordinary differential equation, ODE, solver (24) configured to solve the first model (18) and the second model (20) to calculate determined trajectories of the indoor, return air and supply air temperatures as a function of trajectories of the optimization variables and of a predicted trajectory of the outside temperature,
- defining a control optimization objective function combining the determined trajectory of the indoor temperature, the trajectory of the heating energy and the trajectory of the cooling energy;
- minimizing the control optimization objective function with respect to the trajectories of the optimization variables; and
- providing optimized trajectories of the optimization variables to the HVAC system (12).

9. Method according to claim 7 or 8, comprising following further steps:
- providing a combined rule-based control model (28), comprising the first model (18), the second model (20) and a third model (22),
- providing the third model (22) using control parameters, giving the optimization variables as a function of the outside temperature,
- providing the second model (20), giving a time derivative of the supply air temperature as a function of the optimization variables, the optimization variables,
- calculating the trajectories of the optimization variables as a function of a trajectory of the outside temperature,
- providing the ODE solver (24), configured to solve the first model (18) and the second model (20) to calculate a determined trajectory of the indoor, return air and supply air temperatures as a function of trajectories of the optimization variables calculated by the third model (22) and of a predicted trajectory of the outside temperature,
- providing the trajectories of the indoor temperature, the trajectory of the heating energy and the trajectory of the cooling energy.

10. Method according to claim 9, comprising following further steps:
- defining a control optimization objective function combining the determined trajectory of the indoor temperature, the trajectory of the heating energy and the trajectory of the cooling energy,
- minimizing the control optimization objective function with respect to the control parameters; and
- updating the control parameters of the third model (22).

11. Method according to claim 9 or 10, comprising following further steps:
- comparing respective energies determined for the control of the HVAC system (12) by using the respective combined model,
- selecting the combined model of the lowest energy need to control the HVAC system (12).

12. Method according to one of claims 7 to 11, comprising following further steps:
- providing a model library (16) comprising pre-sets of the models,
- selecting the respective models from the pre-sets of the models as a function of metadata of the HVAC system (12).

13. Computer-program-product with stored machine-readable commands, which, when executed by a control device (10) according to any one of the preceding claims 1 to 6, cause the computer-program-product to carry out the method according to any one of the preceding claims 7 to 12.

14. Computer-readable storage medium comprising instructions which, when executed by a computer, cause the computer to carry out the steps of the method according to any one of the preceding claims 1 to 6.
